# EUROPEAN PATENT SPECIFICATION

(11) **EP 1 669 815 B1**
(45) Date of publication and mention of the grant of the patent: **20.02.2019**
(21) Application number: 04292953.9
(22) Date of filing: 10.12.2004
(51) Int. Cl.: G03H 1/00, B29D 11/00, B24B 13/005, G03H 1/08

(54) **Method for printing a binary hologram on a manufactured product, and optical lens with a binary hologram printed thereon**
Verfahren zum Drucken eines binären Hologramms auf einem hergestellten Produkt, und optische Linse mit einem darauf aufgedruckten binären Hologramm
méthode d'impression d'un hologramm binaire sur un produit manufacturé et lentille optique comportant un hologramme binaire imprimé

(43) Date of publication of application: 14.06.2006
(73) Proprietor: Essilor International, 94220 Charenton-le-Pont (FR); International Business Machines Corporation, Armonk, NY 10504 (US)
(72) Inventor: Begon, Cédric, 147 rue de Paris 94220 Charenton-Le-Pont (FR); Cano, Jean-Paul, 147 rue de Paris 94220 Charenton-Le-Pont (FR); Schmid, Heinz, 8820 Waedenswil (CH)
(74) Representative: Cabinet Plasseraud

(56) References cited:
- WO-A-01/23921
- WO-A1-88/04439
- DD-A5- 297 519
- DE-A1- 19 644 620
- JP-A- H04 147 180
- O'SHEA D. & AL.: "Diffractive Optics" December 2003 (2003-12), SPIE PRESS , BELLINGHAM, WASHINGTON , XP002330713 * paragraph [8.3.4]; figure 8.12 *
- XIA Y ET AL: "SOFT LITHOGRAPHY" ANGEWANDTE CHEMIE. INTERNATIONAL EDITION, VERLAG CHEMIE. WEINHEIM, DE, vol. 37, 1998, pages 551-575, XP000985399 ISSN: 0570-0833
- GALE M T ET AL: "MICRO OPTICS - Chap. 6 : Replication" MICRO-OPTICS: ELEMENTS, SYSTEMS AND APPLICATIONS, 1997, pages 158-159,165, XP002322732

## Description

The invention relates to a method for printing a binary hologram on a manufactured product such as, for example an optical lens. It also relates to an optical lens with a binary hologram printed thereon.

Holograms are well known two-dimension optical objects. A hologram is based on a source image, and can be described as a phase record of a light reflected by the source image. When the hologram is subsequently lightened with a suitable light beam, it produces a reconstruction image which corresponds to the source image.

Binary holograms are digital holograms made up of pixels, each pixel being associated with an amplitude value selected among two possible values.

Printing a hologram on a manufactured product is well known, in particular for providing an authenticity proof of the product. This is used for credit cards and money bills, for example, because it makes it possible to detect counterfeiting rapidly. In fact, holograms are used as authenticity proving elements because they are difficult to reproduce, due to the technical means which are necessary for hologram generation and printing.

But hologram printing is generally expensive, and thus induces an increase in the cost of the manufactured product. Then, holograms cannot be used for many products, for which the market price is strongly constrained. It is so, for example, for optical lenses, and more particularly for optical lenses designed for eyewear, called ophthalmic lenses. In the case of ophthalmic lenses it is possible to print the said hologram on convex side or concave side.

Then, it is an object of the invention to provide a method for printing a hologram on a manufactured product, which is less expensive.

The invention thus proposes a method for printing a binary hologram on a receiving surface of a manufactured product as defined in claim 1.

A hologram printing method according to the invention thus uses the printing process called "micro-contact printing". Such process is well known, and corresponds to the steps b to e of the method. The micro-contact printing method is suitable for achieving prints with a submicronic accuracy. So it is compatible with the holography requirements for obtaining a reconstruction image which exhibits a good quality. In fact, the accuracy of a hologram printed by using the micro-contact printing process can be better than 0.1 µm (micrometer). Furthermore, holograms produced by micro-contact printing are cheap, and adapted for high production throughput.

However, a hologram printed according to the invention can be very difficult to reproduce if the stamp is not available. Then, it can be used as an authenticity proving element of the product. The difficulty for counterfeiting the hologram arises from the fact that the hologram pattern which is printed on the manufactured product may be complicated. If the hologram pattern is not correct, i.e. if it incorporates pixels or details which are different from those of the original pattern, then the reconstruction image is distorted or blurred.

Step a) of a method according to the invention can be achieved efficiently without inducing high costs by using computing means. Indeed, softwares now exist, which can produce binary computer-generated holograms rapidly, even for complicated source images. Such hologram generation method does not involve long nor expensive steps.

Advantageously, the hologram is designed so that the reconstruction image can be viewed upon lightening of the hologram printed on the manufactured product with a laser beam directed onto the receiving surface. In this case, the viewing of the reconstruction image can be performed easily. It only requires cheap equipment, such as a laser pen as currently available. Furthermore, the lightening of the hologram can be performed with any distance between the hologram and the laser, yielding to a very easy operation for viewing the reconstruction image. In another embodiment, a specific arrangement of lenses can be introduced on the laser path to optimize the resolution of the image at a given distance.

The hologram may comprise hologram pixels close to each other, each hologram pixel having a surface comprised between 0.2 µm² and 4.0 µm². Preferably, the hologram comprises a great number of pixels, for example more than 10 000 hologram pixels, so that the reconstruction image exhibits a good quality.

The metal layer may be designed so that the reconstruction image can be viewed in reflection mode of a lightening beam directed onto the receiving surface. Alternatively, if the manufactured product is transparent, the hologram can be designed so that the reconstruction image can be viewed in transmission mode of the lightening beam. This applies, for example, to an optical lens.

The invention also provides an optical lens with a binary hologram printed on a surface of said lens. It may be, in particular, a lens adapted for eyewear. For reducing disturbance in the normal use of the lens caused by the hologram, the hologram can be printed near a peripheral edge of the lens.

In particular, the hologram is printed using a method as described above. Indeed, such printing method is appropriate for manufactured products such as optical lenses, because of its low cost and its high throughput. Furthermore, the required production equipments can be easily combined with the existing manufacturing and distribution structures for optical lenses.

Optical lenses often have at least one pseudo-spherical surface. In the frame of the present invention, a pseudo-spherical surface refers to a continuous surface, i.e. without steps nor gaps, which is convex or concave. Then, a spherical surface is a particular case in which the curvature radii of the surface along two perpendicular directions are equal. Therefore, the expression of pseudo-spherical surfaces as used hereafter includes the case of spherical surfaces. When using improvements of the micro-contact printing process such as disclosed US 5,817,242, the binary hologram may be printed on a surface of a lens which is pseudo-spherical.

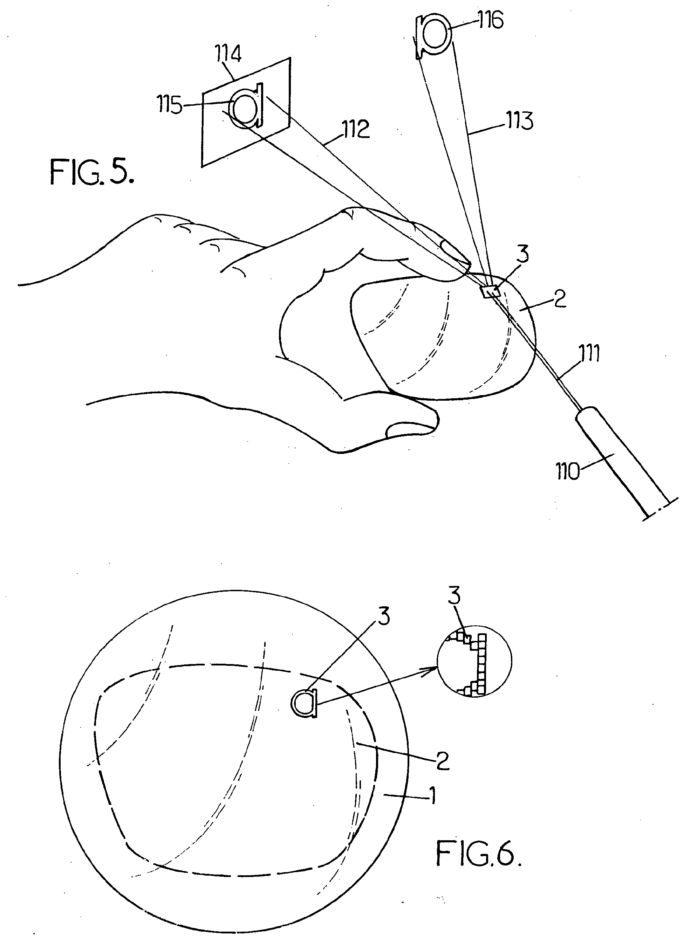

In the present description, any subject matter which does not fall within the scope of the claims does not form part of the invention, but is rather useful for understanding the invention. Among the embodiments and drawings, the claimed invention is exemplified in Fig. 6 and corresponding part in the description.

These and other aspects will become apparent from the non-limiting implementation described hereafter in reference to the following drawings :
- Figure 1 is a diagram of the main steps for a hologram printing method according to the invention ;
- Figure 2 is a perspective view of a stamp adapted for printing a hologram according to the invention ;
- Figure 3a and 3b are enlarged views of a binary hologram printed according to the invention ;
- Figures 4a and 4b show ophthalmic lens blanks with holograms printed according to the invention ;
- Figure 5 illustrates a reconstruction step for a hologram; and
- Figure 6 shows an ophthalmic lens with a printed hologram according to the invention.

In theses figures, same reference numbers refer to similar elements, or to elements with similar function. Furthermore, for clarity reason, the sizes of the represented elements do not correspond to sizes of actual elements.

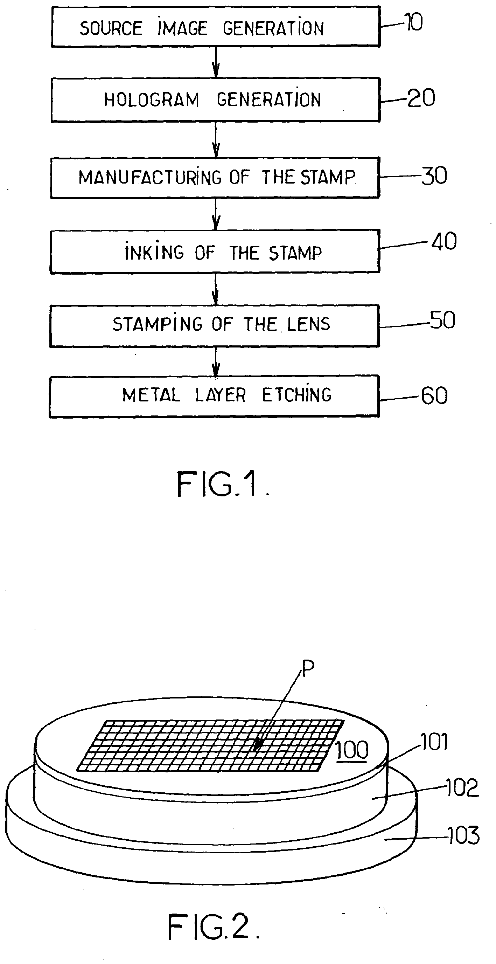

According to Figure 1, the hologram printing method starts by generating a source image (step 10). Various methods may be used therefore, such as photography based methods, capture of a printed paper by scanning, etc. According to a preferred implementation, the source image is computer generated. Then, it is recorded as a two-dimension table comprising luminous values respectively associated to pixels of the source image. In this manner, no physical support is required for the source image, such as paper sheet or display board. The source image may contain, for example, a branding logo such as a symbol or a group of alphanumeric characters.

A binary hologram is then computed (step 20), based on the source image. Various programs are available now, which perform calculations resulting in defining the hologram as another two-dimension table. This another table respectively associates amplitude values to hologram pixels. Each amplitude value is selected in a set of two possible values. These possible values may be 0 and 1, or -1 and +1, depending on the program used or on the program configuration parameters. The computation can take into account the specific shape and profile of the substrate to be printed, if it is necessary to reach high quality definition for the reconstructed image. In addition, if the substrate to be printed shows optical power, it is also possible to take this effect into account in the computation step, in order to optimize the reconstruction of the image under laser illumination.

A stamp is manufactured, with a pattern corresponding to the binary hologram (step 30). Figure 2 illustrates such stamp. It comprises two elastomer superimposed layers, respectively 101 and 102, affixed to a rigid body 103. The body 103 may be of any material which is stable in shape, such as metals, glass or hard plastics. Layer 102 is thicker than layer 101, and both layers are made of a resilient material. For example, layers 101 and 102 are respectively 0.5 mm and 2 mm thick. Layer 102 is affixed to the rigid body 103 at its lower surface, and to layer 101 at its upper surface. Layer 101 is engraved at its upper surface 100 with a pattern P corresponding to the binary hologram. Thus, parts of the surface 100 respectively correspond to the hologram pixels, with a height level associated to the binary amplitude value of each hologram pixel. Two heights of the surface 100 are thus defined, with a difference of 1 pm, for example. The surface 100 forms the stamping surface of the stamp. Various processes may be used for manufacturing the stamp, which are supposed to be known and not described here. Among these processes, photolithography based processes are preferred, because they provide stamps with accurate hologram patterns.

The stamp is used for printing the pattern on an ophthalmic lens. The lens may be of any material, including organic materials such as polyethylene or acrylate based materials. It is initially coated with a metal layer. The metal may be gold, silver, palladium, platinum, aluminium or copper. The metal layer may be about 30 nm (nanometre) thick, for example. Known processes as evaporation or sputtering can be used for depositing the metal layer onto the receiving surface of the lens. The receiving surface of the ophthalmic lens may be 80 mm (millimetre) in diameter, and may be convex with a curvature radius greater than 55 mm, for example.

Ink is first transferred onto the stamping surface 100 by any known method, including direct inking, dipping into an ink tank and ink spraying (step 40 in Figure 1). The ink excess on the stamping surface 100 is eliminated by blowing filtered air or nitrogen against the stamping surface.

Then, the stamping surface 100 is pressed against the receiving surface of the lens, so that ink is deposited on the metal layer at locations corresponding to the pattern P (step 50). During this stamping operation, the stamping surface 100 accommodates the curvature of the receiving surface of the lens, thanks to the deformation capability of the layers 101 and 102 of the stamp. In fact, layer 102 acts as a soft back support for layer 101. For this reason, layer 102 should be soft enough, whereas layer 101 should be hard enough so that the pattern P experiences minimal distortions during printing. In a simpler embodiment, layers 101 and 102 could be reduced to one single layer of the same material if pattern stability requirements are not too stringent. For example, the commercial product named Sylgard® 184 and supplied by Dow Corning may be used.

The ink is designed for protecting the metal layer from etching. Preferably, the ink is designed for forming a self-assembled molecular monolayer on the metal layer. Such ink is very efficient for protecting against etching because of the high density of the deposited ink layer. It comprises molecules which have a functional group that binds to the metal material of the layer. A remainder part of each molecule, for example a long-chained hydrocarbon, interacts with neighbouring molecules to form a dense structure which is impenetrable by the etching agent. For example, hexadecanethiol (C₁₆H₃₄S) based ink, supplied by Sigma Aldrich, is appropriate with a gold layer deposited on the receiving surface of the lens.

After the stamp has been removed from the lens, the receiving surface 100 of the lens is contacted with an etching agent, so that the metal layer is etched at locations in the receiving surface where no ink has been deposited during the stamping operation (step 60 in Figure 1). Known processes as wet etching can be used, depending on the material of the metal layer. In particular, a solution containing ferric nitrate (Fe(NO₃)₃) at 40 mMole/litre and thiourea (CH₄N₂S) at 60 mMole/litre is appropriate for etching a gold layer at ambient temperature. It is also possible to use a pH-controlled cyanide solution as etching solution. After etching, metal layer parts remain only at locations in the receiving surface where ink has been deposited by the stamp, according to the pattern P.

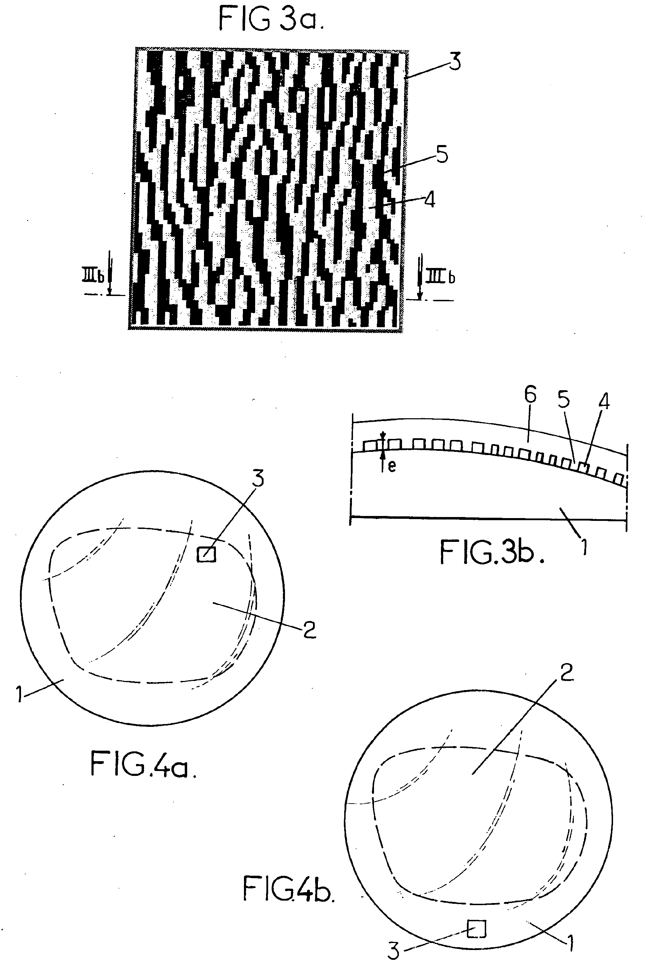

Figures 3a and 3b represent a portion of a binary hologram 3 printed on the lens. The lens is referenced 1 and Figure 3b is a cross sectional view of the lens in the plane indicated by the arrows in Figure 3a. The hologram 3 is made up of a pixel matrix, for example 400 x 400 pixels. Each pixel may be square-shaped, with 1 µm side length, for example. Then, the hologram 3 appears as a little diffusing reflective square 0,4 mm x 0,4 mm in size. Each hologram pixel corresponds either to a remaining portion of the metal layer 4, or to a uncovered portion 5 of the lens 1. The thickness of the remaining metal parts 4 is indicated by e. It is equal to the initial thickness of the metal layer. According to the hologram general principles, the vertical arrangement of the metal parts 4 in the hologram of Figure 3a reveals that the source image has a structure which is more pronounced parallel to the horizontal direction than vertically.

Figures 4a and 4b each represent a eyeglass blank 1. In a known manner, the eyeglass 2 is obtained by eliminating a peripheral portion of the blank, according to a contour drawn on the blank. The contour is indicated in broken line. The hologram 3 can be printed on the blank 1 either inside the contour (Figure 4a) or outside the contour (Figure 4b). The printing of the hologram 3 inside the contour is appropriate when the hologram is to remain on the final eyeglass. Then it is possible to authenticate the eyeglass, for example, by checking the hologram content.

Figure 5 illustrates a reconstruction step for checking the hologram content. The eyeglass 2 is lightened using a laser pen 110 of limited power, for example of red colour. The laser beam 111 is directed onto the hologram 3. Any lightening distance may be arranged between the laser pen 110 and the hologram 3. The laser beam 111 is diffracted by the hologram 3, so that it is divided into two transmitted beams 112 and 113. Each transmitted beam 112, 113 produce a reconstruction image, respectively 115 and 116, both corresponding to the source image. The reconstruction images 115 and 116 are formed remotely from the hologram 3, at a distance comprised between 20 cm and 50 cm (centimetres), for example. Each reconstruction image can be revealed by arranging a screen 114 on the path of the corresponding transmitted beam 112, 113. Any object may be used as a screen, because the lightening beam is of laser type. The reconstructed source images 115, 116 are several centimetres in size, so that the content of the image source appears clearly and can be viewed by several people at the same time. The reconstruction images 115 and 116 may correspond to opposite diffraction orders, such as +1 and -1, for example, so that the reconstruction images 115 and 116 are in mirroring relation. For illustrative purpose of Figure 5, the source image is supposed to contain the character "a". Instead of the a-character, the source image may comprise branding elements for authenticating the lens.

A transparent hard coat 6 (Figure 3b) may be arranged on the surface of the lens 1 above the hologram. Such hard coat protects the hologram against accidental scratches or dirty depositions which would cause a distortion or a reduction in the visibility of the reconstruction images 115, 116. Such hard coat could be a polymerizable coating.

According to the invention, the hologram is printed at multiple locations in the receiving surface of the manufactured product. Because the laser beam 111 is about 1 mm² in cross section, several hologram prints can be lightened simultaneously. Therefore, each hologram print participates to the formation of the reconstruction images, so that these images are more luminous, substantially in proportion with the number of hologram prints which are lightened. Advantageously, some of the multiple prints of the hologram 3 on the lens 1 are close one to another. Then, the contrast of the reconstruction images 115 and 116 is increased.

The pattern P corresponding to the hologram is reproduced at multiple locations in the stamping surface 100 of the stamp in step b). The locations of the hologram prints 3 in the receiving surface of the lens are then determined by the pattern locations in the stamping surface 100 when step d) is performed so that the whole stamping surface is pressed against the receiving surface. Thus, the time necessary for implementing the invention is substantially independent of the number of hologram prints achieved.

Optionally, the locations in the receiving surface of the lens are selected so that the hologram prints form respective pixels of a macroscopic pattern directly visible on the receiving surface. Figure 6 and its enlarged view illustrate such embodiment. In the example illustrated, the hologram prints 3 are located on the lens so as to form another character "a" of one to several millimetres in size. Thus, the macroscopic pattern itself on the receiving surface is similar to the source image, although there is no relation between the source image and said macroscopic pattern on the receiving surface of the lens.

A binary hologram printing method according to the invention has numerous advantages, and the following ones can be listed :
- the method is compatible with the transparency requirement of an optical lens ;
- the method is compatible with aesthetic requirements of an ophthalmic lens ;
- a branding element contained in the source image can be viewed easily by performing an image reconstruction operation. Such operation is simple, rapid and costless ;
- no contact with the lens surfaces is necessary during the image reconstruction operation, so that the risk for scratching the lens is reduced.

Finally, the hologram can be printed on the lens so that at least one of the reconstruction images corresponds to the source image positively or negatively. This depends on the rendering of a luminous point in the source image, as a luminous point or as a dark point in the reconstruction image.

Furthermore, it is clear that the invention described in details may be adapted or modified in order to comply with special applications. For example, the pattern may be printed positively or negatively, in a manner that can be immediately derived from the implementation described.

In particular, it is straightforward to implement the invention by using the technique so called "Positive Micro contact Printing", an example of such being described in the article "Positive Microcontact Printing", in the Journal of the American Chemical Society, volume 124, page 3834 (2002)

The invention can also be implemented with the technique so called "Electroless deposition" by using specific catalyst molecules as ink on the stamp, an example of such being described in the journal article "Patterned Electroless Deposition of Copper by Microcontact Printing Palladium (II) complexes on Titanium-covered surfaces", Langmuir volume 16, page 6367 (2000),.

## Claims

1. Method for printing a binary hologram (3) on a receiving surface of a manufactured product, said receiving surface being coated with a metal layer, the method comprising the following steps :
a- generating the binary hologram based on a source image (10, 20) ;
b- providing a stamp with a pattern (P) corresponding to the hologram on a stamping surface (30) ;
c- inking the stamping surface (100) with a masking solution (40) ;
d- pressing the stamping surface against the receiving surface (50), so that masking solution is transferred onto the receiving surface according to the pattern (P) that might be flat or curved; and
e- contacting the receiving surface with an etching agent (60), so that parts of the metal layer are etched where said metal layer parts are not covered with masking solution;
wherein the hologram (3) is printed at multiple locations in the receiving surface of the manufactured product,
and wherein the pattern (P) corresponding to the hologram is reproduced at several locations in the stamping surface (100) in step b), the locations of the hologram prints (3) in the receiving surface being determined by the pattern locations in the stamping surface when performing step d) and the whole stamping surface is pressed against the receiving surface,
and wherein said locations in the receiving surface are selected so that the hologram prints (3) form respective pixels of a macroscopic pattern directly visible on the receiving surface, and said macroscopic pattern on the receiving surface is similar to the source image.

2. Method according to Claim 1, wherein the binary hologram is computer-generated.

3. Method according to Claim 1 or 2, wherein the hologram is designed so that a reconstruction image corresponding to the source image is viewed upon lightening of the hologram printed on the manufactured product (3) with a laser beam (111) directed onto the receiving surface.

4. Method according to any one of the preceding claims, wherein the hologram (3) comprises hologram pixels close to each other, each hologram pixel having a surface comprised between 0.2 µm² and 25.0 µm².

5. Method according to any one of the preceding claims, wherein the hologram (3) comprises hologram pixels close to each other, each hologram pixel having a surface comprised between 0.2 µm² and 4.0 µm².

6. Method according to Claim 4 or 5, wherein the hologram (3) comprises more than 10 000 pixels.

7. Method according to any one of the preceding claims, wherein the metal layer is designed so that a reconstruction image is viewed in reflection mode of a lightening beam directed onto the receiving surface.

8. Method according to any one of the preceding claims, wherein the masking solution is designed for forming a self-assembled molecular monolayer on parts of the metal layer.

9. Method according to any one of the preceding claims, wherein the receiving surface is pseudo-spherical.

10. Method according to any one of the preceding claims, wherein said manufactured product is an optical lens (1, 2).

11. Method according to Claim 10, wherein the optical lens (1, 2) is an ophthalmic lens.

12. Method according to Claim 10 or 11, wherein the hologram (3) is printed on the lens (1, 2) near a peripheral edge of said lens.

13. Method according to any one of the claims 10 to 12, wherein the hologram (3) is designed so that a reconstruction image (115, 116) is viewed in transmission mode of a lightening beam (111) directed onto the receiving surface.

14. Optical lens (1, 2) with a binary hologram (3) printed on a surface of said lens, wherein said hologram (3) is printed using a method according to any one of the claims 1 to 13.

15. Optical lens according to Claim 14, adapted for eyewear.

16. Optical lens according to Claim 14 or 15, wherein said surface of the lens is pseudo-spherical.

17. Optical lens according to any one of the claims 14 to 16, wherein the source image comprises branding elements for authenticating the lens.

18. Optical lens according to any one of the claims 14 to 17, further comprising a transparent hard coat (6) arranged on said surface above the hologram (3).

## Patentansprüche

1. Verfahren zum Drucken eines binären Hologramms (3) auf eine Aufnahmefläche eines gefertigten Produkts, wobei die Aufnahmefläche mit einer Metallschicht beschichtet ist, wobei das Verfahren die folgenden Schritte umfasst:
a- Erzeugen des binären Hologramms auf der Basis eines Quellbilds (10, 20);
b- Bereitstellen eines Stempels mit einem Muster (P), das dem Hologramm auf einer Stempelfläche (30) entspricht;
c- Einfärben der Stempelfläche (100) mit einer Maskierlösung (40);
d- Pressen der Stempelfläche gegen die Aufnahmefläche (50), so dass die Maskierlösung auf die Aufnahmefläche dem Muster (P) entsprechend, das flach oder gebogen sein kann, übertragen wird; und
e- Kontaktieren der Aufnahmefläche mit einem Ätzmittel (60), so dass Teile der Metallschicht dort geätzt werden, wo die Metallschichtteile nicht mit Maskierlösung bedeckt sind;
wobei das Hologramm (3) an vielen Stellen in der Aufnahmefläche des gefertigten Produkts gedruckt wird,
und wobei das Muster (P), das dem Hologramm entspricht, in Schritt b) an mehreren Stellen in der Stempelfläche (100) reproduziert wird, wobei die Stellen des Hologrammdrucks (3) in der Aufnahmefläche durch die Musterstellen in der Stempelfläche bestimmt werden, wenn der Schritt d) ausgeführt und die gesamte Stempelfläche gegen die Aufnahmefläche gedrückt wird,
und wobei die Stellen in der Aufnahmefläche so ausgewählt werden, dass die Hologrammdrucke (3) jeweilige Pixel eines makroskopischen Musters bilden, das direkt auf der Aufnahmefläche sichtbar ist, und das makroskopische Muster auf der Aufnahmefläche dem Quellbild ähnlich ist.

2. Verfahren nach Anspruch 1, wobei das binäre Hologramm computergeneriert ist.

3. Verfahren nach Anspruch 1 oder 2, wobei das Hologramm so konzipiert ist, dass ein Rekonstruktionsbild, das dem Quellenbild entspricht, auf das Beleuchten des auf das gefertigte Produkt (3) gedruckten Hologramms mit einem Laserstrahl (111) hin, der auf die Aufnahmefläche gerichtet wird, betrachtet wird.

4. Verfahren nach einem der vorhergehenden Ansprüche, wobei das Hologramm (3) Hologrammpixel eng beieinander umfasst, wobei jedes Hologrammpixel eine Fläche aufweist, die zwischen 0,2 µm² und 25,0 µm² liegt.

5. Verfahren nach einem der vorhergehenden Ansprüche, wobei das Hologramm (3) Hologrammpixel eng beieinander umfasst, wobei jedes Hologrammpixel eine Fläche aufweist, die zwischen 0,2 µm² und 4,0 µm² liegt.

6. Verfahren nach Anspruch 4 oder 5, wobei das Hologramm (3) mehr als 10 000 Pixel umfasst.

7. Verfahren nach einem der vorhergehenden Ansprüche, wobei die Metallschicht so konzipiert ist, dass ein Rekonstruktionsbild im Reflexionsmodus eines Beleuchtungsstrahls, der auf die Aufnahmefläche gerichtet wird, betrachtet wird.

8. Verfahren nach einem der vorhergehenden Ansprüche, wobei die Maskierlösung zum Bilden einer selbstzusammengefügten molekularen Einzelschicht auf Teilen der Metallschicht konzipiert ist.

9. Verfahren nach einem der vorhergehenden Ansprüche, wobei die Aufnahmefläche pseudosphärisch ist.

10. Verfahren nach einem der vorhergehenden Ansprüche, wobei das gefertigte Produkt eine optische Linse (1, 2) ist.

11. Verfahren nach Anspruch 10, wobei die optische Linse (1, 2) eine ophthalmische Linse ist.

12. Verfahren nach Anspruch 10 oder 11, wobei das Hologramm (3) auf die Linse (1, 2) in der Nähe der peripheren Kante der Linse gedruckt ist.

13. Verfahren nach einem der Ansprüche 10 bis 12, wobei das Hologramm (3) so konzipiert ist, dass ein Rekonstruktionsbild (115, 116) im Übertragungsmodus eines Beleuchtungsstrahls (111), der auf die Aufnahmefläche gerichtet ist, betrachtet wird.

14. Optische Linse (1, 2) mit einem binären Hologramm (3), das auf eine Fläche der Linse gedruckt wird, wobei das Hologramm (3) unter Anwendung eines Verfahrens nach einem der Ansprüche 1 bis 13 gedruckt wird.

15. Optische Linse nach Anspruch 14, die für Brillen und Kontaktlinsen geeignet ist.

16. Optische Linse nach Anspruch 14 oder 15, wobei die Oberfläche der Linse pseudosphärisch ist.

17. Optische Linse nach Anspruch 14 bis 16, wobei das Quellenbild Markenelemente zum Authentifizieren der Linse umfasst.

18. Optische Linse nach einem der Ansprüche 14 bis 17, ferner einen transparenten harten Belag (6) umfassend, der auf der Oberfläche über dem Hologramm (3) angeordnet ist.

## Revendications

1. Procédé pour imprimer un hologramme binaire (3) sur une surface de réception d'un produit fabriqué, ladite surface de réception étant recouverte d'une couche métallique, le procédé comprenant les étapes suivantes :
a- générer l'hologramme binaire en fonction d'une image source (10, 20) ;
b- fournir un tampon avec un motif (P) correspondant à l'hologramme sur une surface de tamponnage (30) ;
c- encrer la surface de tamponnage (100) avec une solution de masquage (40) ;
d- presser la surface de tamponnage contre la surface de réception (50), de sorte que la solution de masquage soit transférée sur la surface de réception conformément au motif (P) qui peut être plat ou courbe ; et
e- mettre en contact la surface de réception avec un agent d'attaque (60), de sorte que des parties de la couche métallique soient attaquées là où lesdites parties de la couche métallique ne sont pas recouvertes par la solution de masquage ;
dans lequel l'hologramme (3) est imprimé à de multiples emplacements dans la surface de réception du produit fabriqué,
et dans lequel le motif (P) correspondant à l'hologramme est reproduit à plusieurs emplacements dans la surface de tamponnage (100) lors de l'étape b), les emplacements des impressions d'hologramme (3) dans la surface de réception étant déterminés par les emplacements de motifs dans la surface de tamponnage lors de la réalisation de l'étape d), et toute la surface de tamponnage est pressée contre la surface de réception,
et dans lequel lesdits emplacements dans la surface de réception sont choisis de sorte que les impressions d'hologramme (3) forment des pixels respectifs d'un motif macroscopique directement visible sur la surface de réception, et ledit motif macroscopique sur la surface de réception est similaire à l'image source.

2. Procédé selon la revendication 1, dans lequel l'hologramme binaire est généré par ordinateur.

3. Procédé selon la revendication 1 ou 2, dans lequel l'hologramme est conçu de sorte qu'une image de reconstruction correspondant à l'image source est visualisée lors de l'éclairage de l'hologramme imprimé sur le produit fabriqué (3) avec un faisceau laser (111) dirigé sur la surface de réception.

4. Procédé selon l'une quelconque des revendications précédentes, dans lequel l'hologramme (3) comprend des pixels d'hologramme proches les uns des autres, chaque pixel d'hologramme ayant une surface comprise entre 0,2 µm² et 25,0 µm².

5. Procédé selon l'une quelconque des revendications précédentes, dans lequel l'hologramme (3) comprend des pixels d'hologramme proches les uns des autres, chaque pixel d'hologramme ayant une surface comprise entre 0,2 µm² et 4,0 µm².

6. Procédé selon la revendication 4 ou 5, dans lequel l'hologramme (3) comprend plus de 10 000 pixels.

7. Procédé selon l'une quelconque des revendications précédentes, dans lequel la couche métallique est conçue de sorte qu'une image de reconstruction soit visualisée en mode de réflexion d'un faisceau d'éclairage dirigé sur la surface de réception.

8. Procédé selon l'une quelconque des revendications précédentes, dans lequel la solution de masquage est conçue pour former une monocouche moléculaire auto-assemblée sur des parties de la couche métallique.

9. Procédé selon l'une quelconque des revendications précédentes, dans lequel la surface de réception est pseudo-sphérique.

10. Procédé selon l'une quelconque des revendications précédentes, dans lequel ledit produit fabriqué est une lentille optique (1, 2).

11. Procédé selon la revendication 10, dans lequel la lentille optique (1, 2) est une lentille ophtalmique.

12. Procédé selon la revendication 10 ou 11, dans lequel l'hologramme (3) est imprimé sur la lentille (1, 2) à proximité d'un bord périphérique de ladite lentille.

13. Procédé selon l'une quelconque des revendications 10 à 12, dans lequel l'hologramme (3) est conçu de sorte qu'une image de reconstruction (115, 116) soit visualisée en mode de transmission d'un faisceau d'éclairage (111) dirigé sur la surface de réception.

14. Lentille optique (1, 2) avec un hologramme binaire (3) imprimé sur une surface de ladite lentille, dans laquelle ledit hologramme (3) est imprimé en utilisant un procédé selon l'une quelconque des revendications 1 à 13.

15. Lentille optique selon la revendication 14, conçue pour des lunettes.

16. Lentille optique selon la revendication 14 ou 15, dans laquelle ladite surface de la lentille est pseudo-sphérique.

17. Lentille optique selon l'une quelconque des revendications 14 à 16, dans laquelle l'image source comprend des éléments de marque pour authentifier la lentille.

18. Lentille optique selon l'une quelconque des revendications 14 à 17, comprenant en outre un revêtement dur transparent (6) disposé sur ladite surface au-dessus de l'hologramme (3).
